(19) Europäisches Patentamt
European Patent Office
Office européen des brevets

(11) Publication number: **0 608 475 A2**

# (12) EUROPEAN PATENT APPLICATION

(21) Application number: **93113216.1**

(51) Int. Cl.5: **G01F 1/58**

(22) Date of filing: **18.08.93**

(30) Priority: **29.01.93 JP 13211/93**

(43) Date of publication of application:
**03.08.94 Bulletin 94/31**

(84) Designated Contracting States:
**DE FR GB IT**

(71) Applicant: **Yokogawa Electric Corporation**
**9-32, Nakacho 2-chome**
**Musashino-shi**
**Tokyo 180(JP)**

(72) Inventor: **Kobayashi, Tamotsu**
**6-36-17 Yokodai,**
**Isogo-ku**
**Yokohama-shi, Kanagawa 235(JP)**
Inventor: **Torimaru, Takashi**
**382-28 Suzuki-cho, 1-chome**
**Kodaira-shi, Tokyo 187(JP)**

(74) Representative: **Henkel, Feiler, Hänzel & Partner**
**Möhlstrasse 37**
**D-81675 München (DE)**

## (54) Capacitance-type electromagnetic flowmeter.

(57) Capacitance-type electromagnetic flowmeter capable of measuring flow rates of fluid without being affected by the flow velocity distribution. If the flowtube of the flowmeter is an open conduit, the measurement is made without being affected by variations in the liquid level. The flowmeter comprises the flowtube insulated at least on its inner surface, an exciting means for applying a magnetic field to the fluid perpendicularly to the axis of the flowtube, and a pair of detecting electrodes mounted in the flowtube. The electrodes are electrically insulated from the fluid and extend at right angles to the axis of the flowtube and also to the magnetic field. The length of each electrode taken axially of the flowtube is in proportion to the cosine of an angle made between a normal to the wall of the flowtube and an axis that is perpendicular to both axes of the flowtube and magnetic field. Where the flowmeter comprises a conduit having a free liquid surface, current signals produced from the detecting electrodes are converted by current-to-voltage converter means into voltage signals and taken out.

EP 0 608 475 A2

## BACKGROUND OF THE INVENTION

### 1. Field of the Invention

The present invention relates to a capacitance-type electromagnetic flowmeter for detecting, via electrostatic capacitances, signal voltages corresponding to flow rates produced in a fluid undergoing measurement and, more particularly, to an improved capacitance-type electromagnetic flowmeter which does not only detect signals from a closed flowtube without being affected by the flow velocity distribution in a fluid when the flowtube is fully filled with the fluid, but which can also detect such signals without being affected either by changes in the level of the fluid or by the flow velocity distribution even if the closed flowtube is not fully filled with the liquid. Furthermore, the invention relates to an improved capacitance-type electromagnetic flowmeter capable of detecting the aforementioned signal voltages without being affected either by changes in the level of the fluid under measurement or by flow velocity distribution even in an open conduit having a free liquid surface.

### 2. Prior Art Techniques

Fig. 1 shows the structure of a conventional electromagnetic flowmeter designed to reduce the effect of flow velocity distribution. This structure is disclosed in Japanese Patent Publication No. 28325/1980 entitled "Electromagnetic Flowmeter". This is described briefly below.

A tube 10 has an electrically insulated inner surface. Magnets 11 and 12 are disposed on opposite sides of the tube 10 to apply magnetic flux Φ to the tube 10. Plural pairs of electrodes 13a, 13b, 14a, 14b, 15a, 15b, 16a, 16b, and 17a, 17b are mounted on the insulated inner surface of the tube 10. The electrodes 13a and 13b are arranged in diametrically opposite relation to each other in the center of the tube 10. The electrodes 14a and 14b are respectively located a given distance above the electrodes 13a and 13b, and the electrodes 15a and 15b are respectively located above the electrodes 14a and 14b and spaced a given distance from the electrodes 14a and 14b. The electrodes 16a, 17a, 16b, and 17b are successively regularly located downward from the electrodes 13a and 13b, respectively. The electrodes 13a and 13b are connected with a first amplifier 18, the electrodes 14a and 14b are connected with a second amplifier 19, the electrodes 15a and 15b are connected with a third amplifier 20, the electrodes 16a and 16b are connected with a fourth amplifier 21, and the electrodes 17a and 17b are connected with a fifth amplifier 22.

The outputs from these amplifiers 18-22 are applied to a converter 23, which applies the average of these outputs across output terminals 24a and 24b. These amplifiers 18-22, the converter 23, and other components together form a signal processor 25.

In the structure shown in Fig. 1, numerous electrode pairs are arranged radially around the tube 10. Consequently, the output signal appearing across the output terminals 24a and 24b indicates the average of flow velocities of fluid flowing across various portions of the tube 10.

Accordingly, if flow velocity distribution is not symmetrical with respect to the axis, the output voltage developed across the output terminals 24a and 24b is in proportion to the flow rate of the fluid flowing through the tube 10.

The prior art electromagnetic flowmeter constructed as described above cannot sufficiently suppress the effect of the flow velocity distribution unless numerous electrodes in contact with the liquid are provided. This makes the structure and arrangement of the electrodes complex. In addition, liquid might leak from these electrodes.

In the case of an electromagnetic flowmeter having a small diameter, there is no space for accommodating the electrodes. Therefore, it is difficult to fabricate this kind of flowmeter in practice.

Furthermore, the signal processor must incorporate numerous amplifiers for averaging out the signal voltages. This increases cost.

Another problem arises from the fact that the electrodes are widely spaced from each other. In particular, when the inside of the tube is not fully filled with liquid or when the liquid level varies in the case of an open conduit, the detected signal voltage takes the form of a discrete signal. This limits the accuracy of calculation of flow rates.

When the tube is not fully filled, the mutually spaced electrodes may be brought into and out of contact with the fluid under measurement by variations in the free liquid surface. Thus, electrochemical potentials on the surfaces of the electrodes vary greatly, resulting in great variations in indicated value.

## SUMMARY OF THE INVENTION

In view of the foregoing problems with the prior art techniques, it is an object of the present invention to provide an electromagnetic flowmeter having a simple electrode structure which is unaffected by the flow velocity distribution in liquid and which does not permit leakage of liquid.

It is another object of the invention to provide an electromagnetic flowmeter having an electrode structure which is not affected by flow velocity distribution even if the diameter of the flowmeter is small.

It is a further object of the invention to provide an electromagnetic flowmeter which comprises a closed flowtube and which is not affected by the flow velocity distribution in a fluid under measurement if the fluid flows through the flowtube without fully filling it.

It is an additional object of the invention to provide an electromagnetic flowmeter which comprises a closed flowtube and whose accuracy does not deteriorate due to variations in the liquid level if a fluid under measurement flows through the flowtube without fully filling it.

It is a still other object of the invention to provide an electromagnetic flowmeter capable of measuring the flow rate of fluid flowing through an open conduit having an open liquid surface without being affected either by variations in the liquid level or by variations in the flow velocity distribution.

An electromagnetic flowmeter satisfying these objects consists principally of: a flowtube electrically insulated at least on its inner surface; an exciting means for applying a magnetic field to a fluid to be measured in a vertical relation to the axis of said flowtube; and a pair of detecting electrodes mounted in said flowtube and electrically insulated from said fluid. The electrodes extend perpendicular to both said axis of the flowtube and said magnetic field. This flowmeter is characterized in that the length of each of said electrodes taken axially of said flowtube is so set as to be in proportion to the cosine of an angle made between a line normal to the wall of said flowtube and an axis which is perpendicular to both said axis of the flowtube and to said magnetic field.

In this way, the length of each of said electrodes taken axially of said flowtube is so set as to be in proportion to the cosine of an angle made between a line normal to the wall of said flowtube and an axis which is perpendicular to both said axis of the flowtube and to said magnetic field. Therefore, flow signals originating from various points on the detecting electrodes are produced while weighted with the cosine of the angle described above. As a result, an output can be obtained without being affected by the flow velocity distribution.

Another electromagnetic flowmeter satisfying the above objects comprises: a conduit which is electrically insulated at least on its inner surface and through which a fluid to be measured flows, the conduit having a free liquid surface therein; an exciting means for applying a magnetic field perpendicular to said free liquid surface; a pair of detecting electrodes mounted in said conduit and electrically insulated from said fluid; and a current-to-voltage converter means for converting electrical current signals produced from said detecting electrodes according to flow rate of said fluid into voltage signals.

Also, a signal accurately indicating a flow rate can be derived by passing the current signals through current-to-voltage converter means if the inside of the conduit is not fully filled with the fluid, the current signal originating from the detecting electrodes insulated from the fluid.

Other objects and features of the invention will appear in the course of the description thereof, which follows.

## BRIEF DESCRIPTION OF THE DRAWINGS

Fig. 1 is a diagram of a conventional electromagnetic flowmeter;

Fig. 2 is a partial cross section and circuit diagram of an electromagnetic flowmeter according to the invention;

Fig. 3 is a diagram illustrating the operation of the flowmeter shown in Fig. 2;

Figs. 4(a) and 4(b) are diagrams illustrating the operation of the flowmeter shown in Fig. 2;

Fig. 5 is a perspective view of the flowmeter shown in Fig. 2, and in which the flow rate has been changed;

Fig. 6 is a perspective view of the flowmeter shown in Fig. 2, and in which the state of flow is formed by an open conduit;

Figs. 7(a) and 7(b) are perspective views of flowmeters similar to the flowmeter shown in Fig. 2, but in which the flowtubes have open conduits of different shapes;

Fig. 8 is a circuit diagram of a first modification of one amplifier shown in Fig. 2;

Fig. 9 is a circuit diagram of a second modification of one amplifier shown in Fig. 2;

Fig. 10 is a circuit diagram of a third modification of one amplifier shown in Fig. 2; and

Fig. 11 is a circuit diagram illustrating the effect of the flowmeter shown in Fig. 2.

DESCRIPTION OF THE PREFERRED EMBODIMENTS OF INVENTION

Referring to Fig. 2, there is shown an electromagnetic flowmeter embodying the concept of the present invention. This flowmeter comprises an insulated cylindrical flowtube 30 through which fluid Q to be measured flows. A uniform magnetic field B is applied parallel to the axis of the flowtube 30.

A pair of conductive electrodes 31 and 32 are mounted in the center of the flowtube 30 along the outer wall of the flowtube 30 in opposite relation to each other. The electrodes 31 and 32 are electrically insulated from the liquid Q. The length of the electrodes 31 and 32 taken along the axis of the flowtube is in proportion to the cosine of an angle $\theta$ made between the curved surface of the flowtube 30 and a line X-X' connecting the centers of the detecting electrodes 31 and 32 at a point at which a line Y-Y' crossing the central cross section of the flowtube 30 intersects the axis Z-Z' of the flowtube.

The detecting electrode 31 is connected with the inverting input terminal (-) of an operational amplifier 33 whose non-inverting input terminal (+) is connected with a common potential point COM. The output terminal of the amplifier 33 is connected with the inverting input terminal (-) via a capacitor $C_{f1}$.

Similarly, the detecting electrode 32 is connected with the inverting input terminal (-) of an operational amplifier 34 whose non-inverting input terminal (+) is connected with a common potential point COM. The output terminal of the amplifier 34 is connected with the inverting input terminal (-) of the amplifier 34 via a capacitor $C_{f2}$.

The output terminals of these operational amplifiers 33 and 34 are connected with the non-inverting input terminal (+) and the inverting input terminal (-), respectively, of a third operational amplifier 35. This amplifier 35 outputs the difference between the voltage signals from the operational amplifiers 33 and 34 to an output terminal 36.

In this structure, the fluid Q undergoing measurement flows through the flowtube 30, producing an electromotive force inside the fluid. This force creates a given potential distribution in the fluid along the inner wall of the insulated flowtube 30. Composite signal voltages produced by this potential distribution are detected by the electrodes 31 and 32, via electrostatic capacitances $C_{w1}$ and $C_{w2}$, respectively, formed by the flowtube 30.

Since the electrostatic capacitances $C_{w1}$ and $C_{w2}$ are quite small, the current signals detected by the electrodes 31 and 32 are supplied to the operational amplifiers 33 and 34, respectively, which convert their respective input current signals into voltage signals. The difference between these two voltage signals is output to the output terminal 36 by the operational amplifier 35.

Insomuch as the novel flowmeter is constructed and operated as described above, the flowmeter is able to accurately measure flow rates without being affected by the flow velocity distribution even if the inside of the flowtube 30 is not fully filled or if the flowtube 30 is a partially open conduit. This is described in further detail below.

For convenience of illustration, the principle of operation of an integration-type electromagnetic flowmeter is now described. In Fig. 3, the cross section of the flowtube of an electromagnetic flowmeter of interest is uniform along the axis of the flowtube, or z-axis direction, irrespective of the shape of the cross section. It is assumed that the wall of the flowtube is insulated.

It is also assumed that a uniform magnetic field having a strength of $H_0$ is applied in the y-axis direction, perpendicular to the axis of the flowtube. The magnetic field covers a length of L in the z-axis direction. X-axis is taken at right angles to y- and z-axes. A cylindrical region having the length L and surrounded by the inner wall of the flowtube is the subject of analysis. Let S be the area of the curved surface of the cylindrical region. Let $A_1$ and $A_2$ be the two cross sections, respectively, which have an area of $A$. A fluid flows in the z-axis direction at a flow rate of Q.

Maxwell field equations hold at any arbitrary point within the region. If the magnetic field varies slowly, displacement current can be neglected compared with conduction current. Where none of polarization of the fluid, transportation of electric charge by the fluid, generation of electric charge, and annihilation of electric charge take place, the following equations hold:

$$\mathrm{rot}\ H = J \qquad (1)$$

$$\mathrm{rot}\ E = 0 \qquad (2)$$

where H is a vector indicating a magnetic field strength, J is a vector indicating a current density, and E is a vector indicating an electric field strength. Let $\sigma$, $\mu$, and v be a specific conductance, permeability, and a

vector indicating a flow velocity, respectively. The current density J can be given by

$$J = \sigma (E + \mu v \times H) \qquad (3)$$

Generally, H is given by the sum of the applied magnetic field $H_0$ and induced magnetic field h. That is, $H = H_0 + h$. Where the electromagnetic flowmeter is an industrial flowmeter for measuring flow rates of an electrolyte such as water, the induced magnetic field h is sufficiently small under normal measuring conditions and can be neglected.

Let $i_x$ be a unit vector in the x-axis direction. Application of the Gaussian dispersion theorem to field vector $i_x \times H_0$ gives rise to

$$\int_V \mathrm{div}\,(i_x \times H_0)\,dv = \int_{S, A1, A2} (i_x \times H_0) \bullet i_n\,da \qquad (4)$$

The volume integration on the left side is performed over the whole region. The area integration on the right side is performed on the curved surface S and on both cross sections $A_1$, $A_2$. In the above equation, $i_n$ is a unit vector directed outward from each surface. From the equations for vector calculations, the following equation holds for the left side:

$$\mathrm{div}\,(i_x \times H_0) = - i_x \bullet \mathrm{rot}\,H_0$$

With respect to the right side, $(i_x \times H_0)$ is perpendicular to $i_n$ on the curved surface. On the cross sections $A_1$ and $A_2$, they cancel each other. Consequently, equation (4) can be modified into the form

$$i_x \bullet \int_V \mathrm{rot}\,H_0\,dv = 0$$

Substitution of equations (1) and (3) into the left side of the above equation results in

$$i_x \bullet \int_V \sigma (E + \mu v \times H_0)\,dv = 0 \qquad (5)$$

From the conditions about equation (2), we now introduce a potential $\phi$ having a relation $E = - \mathrm{grad}\,\phi$.

An equation $i_x \bullet \mathrm{grad}\,\phi = \mathrm{div}(i_x\phi)$ for vector calculations is used. First, by dividing the first term of equation (5) by $\sigma$, we obtain

$$i_x \bullet \int_V E\,dv = - \int_V \mathrm{div}(i_x\phi)dv$$

Using the Gaussian dispersion theorem again, we have

$$i_x \bullet \int_V E\,dv = - \int_S \phi\,(s)\,i_x \bullet i_n\,ds - \int_A \{\phi\,(z = 0) - \phi\,(z = 1)\}\,i_x \bullet i_n\,da \qquad (6)$$

The second term of the right side is zero because of the orthogonality between $i_x$ and $i_n$.

Then, the second term of equation (5) can be changed into the form

$$i_x \bullet \int_V \mu v \times H_0\,dv = i_x \bullet {}_0\!\int^L \{ \int_A \mu v \times H_0\,da\}\,dz \qquad (7)$$

Since $H_0$ has only a y-component, the vector $\mu v \times H_0$ can be divided into its x- and y-components as follows.

$$\mu v \times H_0 = - i_x \mu v H_0 v_z + i_z \mu v H_0 v_x$$

By making use of the nature of fundamental vectors of a coordinate system, the right side of equation (7) can be changed into the form

$$i_x \bullet \int_V \mu v \times H_0\,dv = - \mu H_0 \bullet {}_0\!\int^L \{ \int_A v_z\,da\}\,dz$$

Since $\int_A v_z\,da = Q$ is constant in the z-axis direction irrespective of the flow velocity distribution, we have

$$i_x \bullet \int_V \mu v \times H_0\,dv = - \mu H_0 Q L \qquad (8)$$

By substituting equations (6) and (7) into equation (5), we have

$$- \mu H_0 Q L = - \int_s \phi (s) i_x \cdot i_n ds \qquad (9)$$

This equation (9) is a fundamental equation for a three-dimensional model of an electromagnetic flowmeter.

In the analysis made thus far, the L is decreased. It is assumed that the flow velocity distribution does not vary to this extent. By eliminating L from equation (9), the following fundamental equation for a two-dimensional model is derived:

$$- \mu H_0 Q = - \int_c \phi (s) i_x \cdot i_n dc \qquad (10)$$

The integration is performed over the whole periphery of the cross section.

Where the flowtube assumes a circular cross section, $i_x \cdot i_n = \cos \theta$. Therefore, equation (10) can take the form

$$Q = - (r / B_0) \int_c \phi (s) \cos \theta \, d\theta \qquad (11)$$

where r is the diameter of the cross section of the flowtube, and $B_0$ is $\mu H_0$.

The description made thus far has assumed that the inside of the flowtube is filled with fluid flowing through it. The theory can also be applied to cases in which the inside is not filled with liquid and there exists a free liquid surface and also to cases in which the flowtube is formed by an open conduit, by considering the process of derivation of the fundamental equation. In these cases, if the flowmeter is so designed that the magnetic field is perpendicular to the free liquid surface, it is not necessary to measure the potential at this portion.

The analysis made thus far is based on the assumption that the magnetic field is totally uniform in the y-axis direction. We will now discuss cases in which the magnetic field has an x-axis component and is not uniform.

It is first assumed that the magnetic field strength $H_0$ has an x-axis component and can be given by

$$H_0 = i_x H_x + i_y H_y$$

where $H_x$ and $H_y$ are functions of a location.

In this case, equations (4)-(6) do not depend on the magnetic field. The vector ($\mu$ v $\times$ $H_0$) included in the right side of equation (7) is given by

$$\mu v \times H_0 = -i_x \mu H_y v_z + i_y \mu H_x v_z + i_z \mu (H_y v_x - H_x v_y)$$

Thus, terms containing $H_x$ appear.

By taking an inner product with $i_x$ and integrating the product, only the first term of the right side remains. The right side of equation (7) is given by

$$i_x \cdot \int_V \mu v \times H_0 dv = \mu \cdot {}_0\int^L \{ \int_A H_y v_z da\} dz \qquad (7)'$$

By substituting equations (6) and (7)' into equation (5), we have

$$\mu \cdot {}_0\int^L \{ \int_A H_y v_z da\} dz = - \int_s \phi (s) i_x \cdot i_n ds$$

By making L short, the following equation is derived as a formula representing a two-dimensional model:

$$\mu \int_A H_y v_z da = - \int_s \phi (s) i_x \cdot i_n dc$$

Eventually, $H_x$ disappears from the equation. The y-axis component $\mu H_y$ (= $B_y$) of the magnetic field at each point is a load to the flow velocity at this point. That is, the effect of the flow velocity distribution can be reduced by making uniform the y-axis component of the magnetic field. The effect is independent of the non-uniformity of the x-axis component of the magnetic field.

For simplicity, the operation of the flowmeter shown in Fig. 2 is described in detail next by referring to Figs. 4(a) and 4(b) and based on a fundamental equation for an electromagnetic flowmeter having a circular cross section, the equation being given by equation (11).

Fig. 4(a) is a pictorial representation of the detecting electrode 31 which is divided into n for ease of illustration. Fig. 4(b) illustrates the relation with the operational amplifier 33 connected with the electrode 31.

In practice, the electrode 31 is entirely made of one conductive substance. In this example, the n portions 31a, 31b, 31c, ... , 31n of the electrode 31 are electrically insulated from each other and mounted on the surface of the insulated flowtube 30 or on the inner wall of the flowtube so as to come into close contact with the surface or wall.

Electrostatic capacitances $C_{wa}$, $C_{wb}$, $C_{wc}$, ..., $C_{wn}$ are formed respectively between the detecting electrodes 31a-31n and the fluid Q via the insulated flowtube 30.

Voltages $v_a$, $v_b$, $v_c$, ..., $v_n$ are induced on the electrodes 31a-31n, respectively, by the fluid Q. These induced voltages $V_a$-$V_n$ are converted into current signals $i_a$, $i_b$, $i_c$, ..., $i_n$, respectively, with respective small electrostatic capacitances $C_{wa}$, $C_{wb}$, $C_{wc}$, ..., $C_{wn}$, and added at the inverting input terminal (-) of the operational amplifier 33. The resulting current is converted back to a voltage by the feedback capacitor $C_{f1}$ and appears at the output terminal.

Accordingly, the voltage $V_0$ appearing at the output terminal of the operational amplifier 33 is given by

$$V_0 = (C_{wa}v_a + C_{wb}v_b + C_{wc}v_c + \dots + C_{wn}v_n) / C_{f1}$$

$$= \sum_{i=a}^{i=n} C_{wi}v_i / C_{f1} \qquad (12)$$

The electrostatic capacitance $C_{wi}$ is so selected that the length of the detecting electrode 31 taken in the z-axis direction of the flowtube 30 is proportional to cos $\theta_i$. The circumferential length is $\Delta\theta_i$. Therefore, assuming that $K_0$ is a reference capacitance and constant, the electrostatic capacitance $C_{wi}$ can be given by

$$C_{wi} = K_0 \cos \theta_i \cdot r \cdot \Delta\theta_i \quad (13)$$

By substituting this into equation (12), we have

$$V_0 = \sum_{i=a}^{i=n} K_0 \cos \theta_i \cdot r \cdot \Delta\theta_i v_i / C_{f1}$$

$$= (K_0 r / C_{f1}) \sum_{i=a}^{i=n} v_i \cos \theta_i \cdot \Delta\theta_i$$

By increasing the number of division n, we have

$$V_0 = (K_0 r / C_{f1}) \int_c \phi (s) \cos \theta \, d\theta \qquad (14)$$

By substituting the relation of equation (11) into this equation (14), we get

$$V_0 = - K_0 B_0 Q / C_{f1} \quad (15)$$

This equation has been obtained without accounting for the flow velocity distribution. In this way, an electromagnetic flowmeter whose output is proportional to the flow rate Q but not affected by the flow velocity distribution is obtained by weighting the electromotive force produced on the inner surface of the

flowtube 30 with cos $\theta$, summing up the current signals derived from the whole detecting electrode 31, and delivering the sum current.

The description made thus far is based on a flowtube filled with water. The present invention can be similarly applied to a flowtube comprising a circular flowtube having a space therein, i.e., the flowtube is not fully filled with liquid. Fig. 5 is a perspective view showing the structure of such an electromagnetic flowmeter.

Electrodes 38 and 39 are formed on the outer surface of an insulated circular flowtube 37 such that their length taken in the axis of the flowtube is in proportion to cos $\theta$. The fluid Q under measurement fills only a part of the inside of the flowtube. A space 40 is left in an upper portion.

Even with this structure, a current signal representing a flow rate is obtained as shown in Fig. 4 by detecting the sum of current signals as a signal indicating the flow rate, in the same way as in Fig. 2.

For example, if the electrode 31n is not in contact with the fluid Q, the voltage $v_n$ is zero. Also, the electrostatic capacitance $C_{wn}$ is zero. Therefore, the impedance at this portion is infinitely large. Hence, this is not added to other currents. That is, only currents converted from electromotive forces produced at the portions where the fluid Q exists are added together. In consequence, the flow rate can be measured correctly, whether the flowtube is filled with liquid or not.

Fig. 6 is a perspective view of an electromagnetic flowmeter comprising a flowtube having an open conduit 41, which is insulated and takes a U-shaped form. The inside of the conduit 41 is filled with a fluid Q under measurement. A magnetic field B is applied perpendicularly to a free liquid surface 42. Detecting electrodes 43 and 44 having a given length along the axis of the conduit are mounted on the curved surface of the conduit 41.

The length of the electrodes 43 and 44 taken longitudinally of the conduit is so selected as to be proportional to the cosine of an angle $\theta$ made between a normal to the wall of the conduit and an axis vertical to both the longitudinal direction of the conduit and the magnetic field, while making reference to equation (10).

Figs. 7(a) and 7(b) are cross-sectional views of electromagnetic flowmeters having open conduits of trapezoidal and triangular cross sections, respectively. In Fig. 7(a), an insulated conduit 45 has a trapezoidal cross section. Detecting electrodes 46 and 47 are mounted on the side wall of this conduit 45. Also in this case, the length of the electrodes 46 and 47 taken longitudinally of the conduit is selected so as to be proportional to cos $\theta$, in the same way as in the case of Fig. 6.

In Fig. 7(b), an insulated conduit 48 assumes a triangular cross section. Detecting electrodes 49 and 50 are mounted on the side wall of the conduit. The length of the electrodes 46 and 47 taken longitudinally of the conduit is so selected as to be in proportion to cos $\theta$, in the same way as in the structure shown in Fig. 6.

Fig. 8 is a circuit diagram of a first modification of the aforementioned operational amplifier 33 (Fig. 2) to which an electrical current is supplied. This amplifier, indicated by 51, is similar to the amplifier 33 shown in Fig. 2 except that the capacitor $C_{f1}$ has been replaced by a resistor $R_1$. An electrostatic capacitance $C_1$ is formed between the electrode and the fluid Q under measurement. A signal voltage produced in the fluid Q is converted into an electrical current signal by the electrostatic capacitance $C_1$, converted into a voltage signal via the resistor $R_1$, and appears at the output terminal of the operational amplifier 51 as a voltage signal.

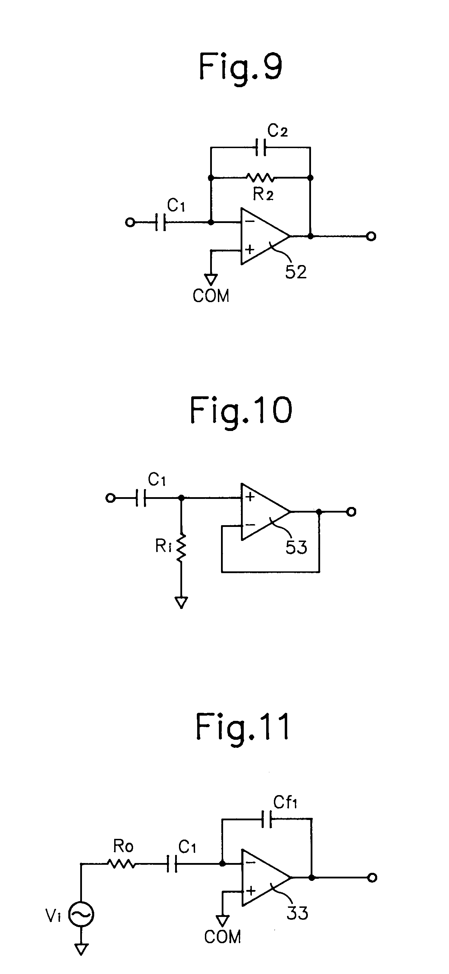

Fig. 9 is a circuit diagram of a second modification of the aforementioned operational amplifier 33 (Fig. 2) to which an electrical current is supplied. A parallel combination of a resistor $R_2$ and a capacitor $C_2$ forms a feedback circuit for an operational amplifier 52. In this case, phase varies between the input and the output. Therefore, it is necessary to take account of phase when signals are treated in succeeding stages.

Fig. 10 is a circuit diagram of a modification of an operational amplifier to which a voltage is applied. A signal voltage is developed in the fluid Q under measurement. This signal voltage is converted into a current signal by an electrostatic capacitance $C_1$ at the input side of an operational amplifier 53, because $|\frac{1}{\omega C}| \gg R_i$. The converted current signal is converted into a voltage signal by a resistor $R_i$. This voltage signal is amplified by the amplifier 53.

This voltage input-type operational amplifier can be applied to an electromagnetic flowmeter comprising an open conduit not fully filled with liquid. However, where this amplifier is used with an electromagnetic flowmeter having a flowtube consisting of an open conduit, i.e., the inside of the flowtube is not fully filled with liquid, flow rates cannot be measured accurately.

In the electromagnetic flowmeter described above, the resistor $R_0$ in contact with liquid is inserted in series with the electrostatic capacitor $C_1$, as shown in Fig. 11. The impedance of the capacitor $C_1$ is much larger than the resistance of the resistor $R_0$ in contact with liquid. Consequently, the measured flow rate is not readily affected by variations in the resistor $R_0$, e.g., the electrical conductivity.

If a detecting electrode touches the fluid under measurement, a DC potential is produced by an electrochemical action. Since this DC potential varies, the indicated flow rate varies. In the electromagnetic flowmeters described thus far, no detecting electrode touches liquid and so this undesirable phenomenon does not take place.

Since a signal is detected via an electrostatic capacitance, if the magnetic field is other than a DC magnetic field, then an exciting means having various waveforms such as rectangular wave and sinusoidal wave can be used.

In the embodiments described above, the length of detecting electrodes taken axially of a flowtube is varied while maintaining a certain relation given by a function cos $\theta$. Theoretically, the effect of the flow velocity distribution can be eliminated by changing the distance between each detecting electrode and a fluid under measurement while maintaining the same relationship given by the function. In practice, however, it is difficult to fabricate a flowtube having a thickness that satisfies the relationship given by cos $\theta$.

Furthermore, as stated in the above embodiment, each detecting electrode is provided in the outer surface of the flowtube. However, each detecting electronode can be built in the flowtube.

As described in detail in connection with the preferred embodiments, in the electromagnetic flowmeter set forth in claim 1, capacitance-detection type detecting electrodes are so shaped that errors caused by flow velocity distribution are reduced. Potentials on the inner wall of the flowtube are detected by the detecting electrodes. The weighted mean value of these potentials is extracted. Hence, an electromagnetic flowmeter which is less affected by the flow velocity distribution can be realized. The flat shape of the electrodes provides a means for producing the weighted mean value. Consequently, the flowmeter can be fabricated at low cost.

In the electromagnetic flowmeter set forth in claim 2, signal potentials developed on the inner wall of an open conduit are converted into current signals via electrostatic capacitances. Therefore, current signals reflecting variations in the liquid level can be combined. The flow rate in the open conduit can be measured without being affected by variations in the liquid level.

In the electromagnetic flowmeter set forth in claim 3, a receiver circuit is built so as to detect electrical currents. Hence, flow rates can be measured correctly, irrespective of whether the inside of the flowtube is fully filled with liquid or not, and irrespective of the distribution of flow velocities.

In the electromagnetic flowmeter set forth in claim 4, the length of each detecting electrode taken axially of the flowtube is in proportion to the cosine of the angle made between a normal to the wall of the conduit and an axis vertical to both the axis of the flowtube and the magnetic field. Therefore, flow rates in the open conduit can be made independent of variations of the liquid level and are not affected by flow velocity distribution.

In the electromagnetic flowmeter set forth in claim 5, a receiver circuit is built so as to detect voltage signals. Therefore, if the flowtube is filled with liquid, flow rates can be measured correctly.

In the electromagnetic flowmeters set forth in claims 6-9, the flowtube and the conduit can take various forms, although the same measuring principle is utilized. Consequently, the shape can be adjusted according to the subject of measurement. This can extend the range of applications.

## Claims

**1.** A capacitance-type electromagnetic flowmeter comprising:

a flowtube electrically insulated at at least its inner surface;

an exciting means for applying a magnetic field to a fluid to be measured in a vertical relation to an axis of said flowtube; and

a pair of detecting electrodes mounted in said flowtube and electrically insulated from said fluid, the electrodes extending perpendicular to both said axis of the flowtube and said magnetic field, a length of each of said electrodes taken axially of said flowtube being so set as to be in proportion to a cosine of an angle made between a line normal to a wall of said flowtube and an axis which is perpendicular to both said axis of the flowtube and said magnetic field.

**2.** A capacitance-type electromagnetic flowmeter comprising:

a conduit which is electrically insulated at at least its inner surface and through which a fluid to be measured flows, the conduit having a free liquid surface therein;

an exciting means for applying a magnetic field perpendicular to said free liquid surface;

a pair of detecting electrodes mounted in said conduit and electrically insulated from said fluid; and

a current-to-voltage converter means for converting electrical current signals, produced from said detecting electrodes according to a flow rate of said fluid, into voltage signals.

3. The capacitance-type electromagnetic flowmeter of claim 1, wherein current signals produced from said detecting electrodes according to the flow rate of said fluid are converted into voltage signals via a current-to-voltage converter means and taken out.

4. The capacitance-type electromagnetic flowmeter of claim 2, wherein a length of each of said electrodes taken along an axis of said conduit is so set as to be in proportion to a cosine of an angle made between a line normal to a wall of said conduit and an axis which is perpendicular to both said axis of the conduit and to said magnetic field.

5. The capacitance-type electromagnetic flowmeter of claim 1, further comprising:
input resistors for converting current signals fed to said detecting electrodes into voltage signals; and
amplifier means for amplifying said voltage signals.

6. The capacitance-type electromagnetic flowmeter of claim 1, 3, or 5, wherein said flowtube is a closed tube fully filled with said fluid.

7. The capacitance-type electromagnetic flowmeter of claim 1, 3, or 5, wherein said flowtube is a closed circular tube fully filled with said fluid.

8. The capacitance-type electromagnetic flowmeter of claim 1, 2, or 3, wherein said flowtube or conduit has a closed periphery and is not fully filled with said fluid.

9. The capacitance-type electromagnetic flowmeter of claim 2 or 4, wherein said conduit is formed by a partially open conduit.

Fig.1 (Prior Art)

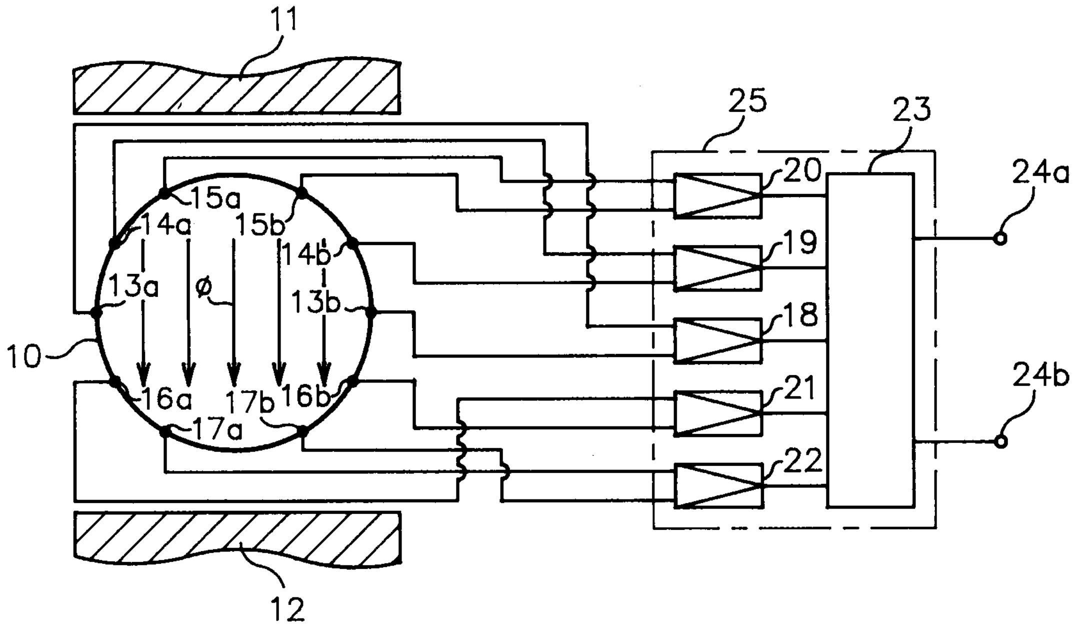


Fig.2

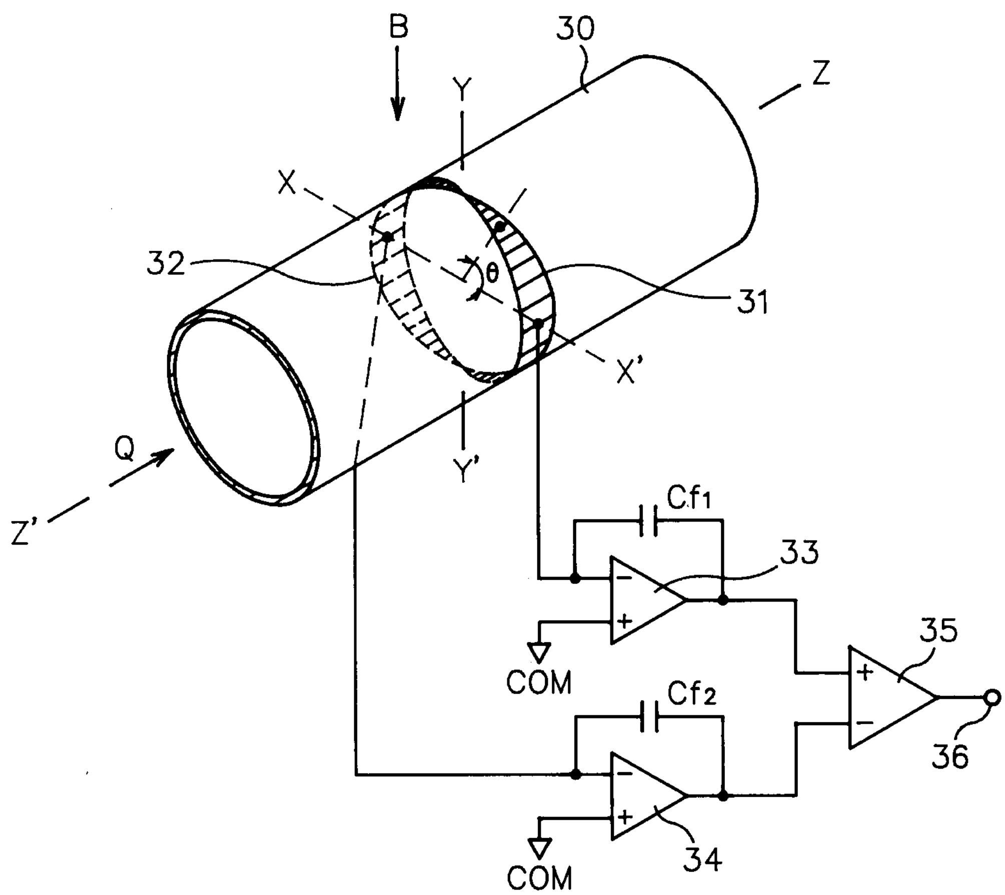

Fig.3

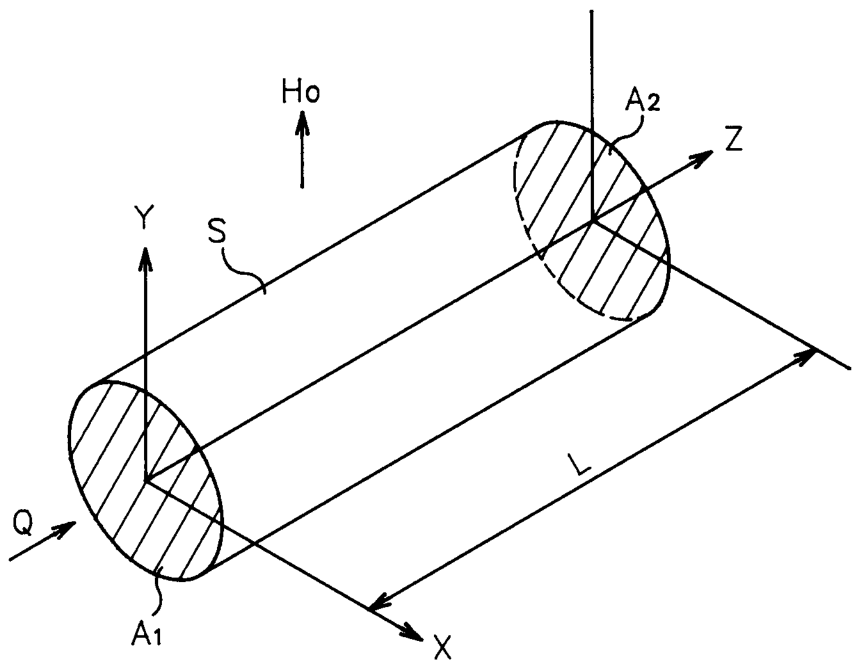


Fig.4 (a)

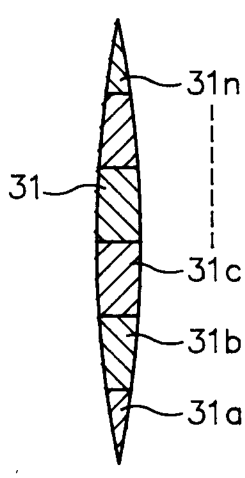


Fig.4 (b)

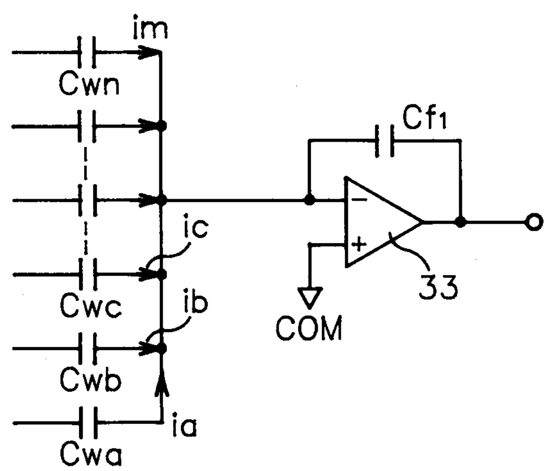

Fig.5

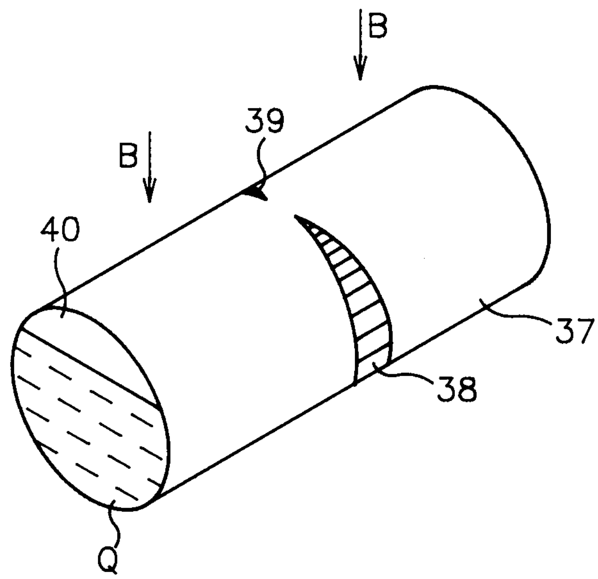


Fig.6

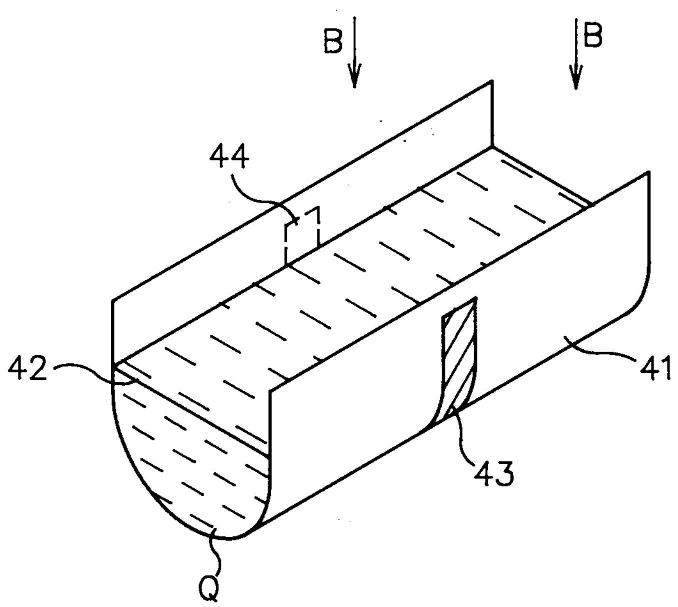

Fig.7 (a)

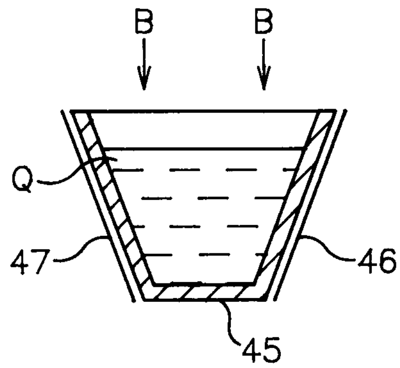


Fig.7 (b)

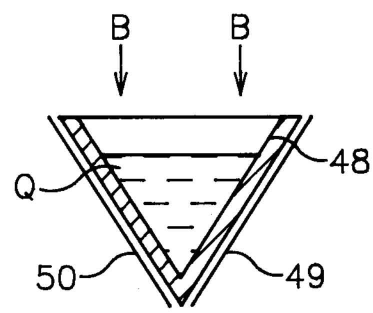


Fig.8

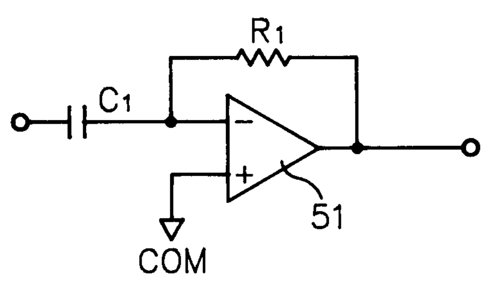

Fig.9

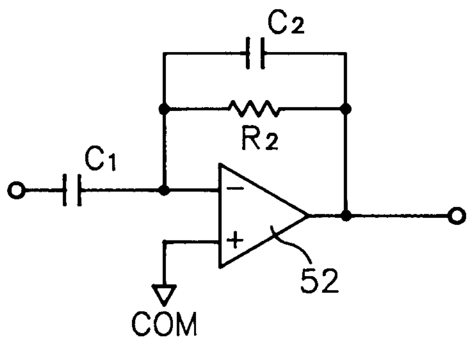


Fig.10

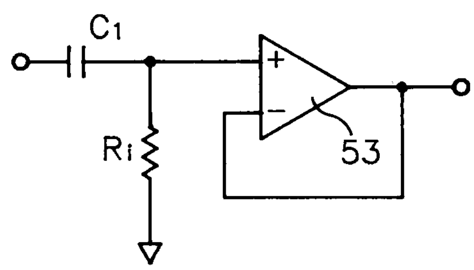


Fig.11